# EUROPÄISCHE PATENTSCHRIFT

(11) **EP 2 295 938 B1**
(45) Veröffentlichungstag und Bekanntmachung des Hinweises auf die Patenterteilung: **08.07.2015**
(21) Anmeldenummer: 10162710.7
(22) Anmeldetag: 12.05.2010
(51) Int. Cl.: G01D 5/14

(54) **Multiturn-Drehgeber**
Multi-tower rotary encoder
Encodeur à plusieurs rotations

(30) Priorität: 14.09.2009 DE 102009029431
(43) Veröffentlichungstag der Anmeldung: 16.03.2011
(73) Patentinhaber: Dr. Johannes Heidenhain GmbH, 83301 Traunreut (DE)
(72) Erfinder: Mayer, Elmar, 83365 Nußdorf (DE); Strasser, Erich, 83308 Trostberg (DE); Hofbauer, Hermann, 83308 Trostberg (DE)

(56) Entgegenhaltungen:
- EP-A2- 1 770 372
- EP-B1- 0 995 974
- EP-B1- 1 391 696
- WO-A1-2008/110257

## Beschreibung

Die Erfindung betrifft einen sicheren Multiturn-Drehgeber gemäß dem Anspruch 1.

Positionsmesseinrichtungen zur Messung der Winkelposition einer Welle sind aus einer Vielzahl von Druckschriften bekannt. Derartige Positionsmesseinrichtungen werden als Drehgeber bezeichnet. Ist eine Positionsmesseinrichtung darüber hinaus so ausgeführt, dass neben der Winkelposition der Welle auch die Anzahl von zurückgelegten Umdrehungen messbar ist, spricht man von einem Multiturn-Drehgeber.

Für die Ausführung der Multiturn-Einheit, also der Einheit zur Feststellung der Anzahl der zurückgelegten Umdrehungen der Welle sind grundsätzlich zwei Lösungen bekannt, zum einen getriebebasierte Multiturn-Einheiten, zum anderen zählerbasierte Multiturn-Einheiten.

Bei getriebebasierten Multiturn-Einheiten treibt die Eingangswelle eine oder auch mehrere Getriebestufen an, die die Eingangsdrehzahl untersetzen. Bei einer Getriebestufe mit einem Untersetzungsverhältnis von 16:1 beispielsweise dreht sich die Ausgangswelle der Getriebestufe einmal je 16 Umdrehungen der Eingangswelle. Die Ausgangswelle treibt wiederum einen Codeträger an, dessen Winkelstellung Rückschlüsse auf die Umdrehungszahl der Eingangswelle erlaubt.

Ein Beispiel für einen getriebebasierten Multiturn-Drehgeber ist in der DE2817172C2 beschrieben. Dabei handelt es sich um einen mehrstufigen Winkelschrittgeber mit einer ersten Winkelschritt-Codescheibe und mehreren nachgeschalteten Winkelschritt-Codescheiben.

Die EP1457762A1 beschreibt eine Vorrichtung zur Messung der Position, des Weges oder des Drehwinkels eines Objektes. Sie enthält drei Maßverkörperungen in Form von drei aufeinander folgenden Codescheiben, die über ein Differenzzahngetriebe gekoppelt sind. Die Abtastung der Codescheiben erfolgt durch eine die Codespuren sämtlicher Codescheiben radial überdeckende Abtasteinheit.

Zählerbasierte Multiturn-Einheiten ermitteln die Anzahl zurückgelegter Umdrehungen einer Welle durch Zählen der Umdrehungen eines Codeträgers, der unmittelbar von der Welle angetrieben wird und somit die gleiche Anzahl von Umdrehungen wie die zu messende Welle zurücklegt. Auf dem Codeträger ist ein Code angeordnet, der von einer Abtasteinheit abgetastet wird. Aus den mit der Abtasteinheit ermittelten Positionssignalen werden in einer Zählelektronik Zählsignale für einen Zähler generiert, der die Anzahl vollständiger Umdrehungen des Codeträgers und somit der Welle drehrichtungsabhängig zählt. Um den Zählerstand des Zählers auch bei ausgeschalteter Hauptstromversorgung, also beispielsweise wenn die Maschine, in der der Multiturn-Drehgeber betrieben wird, ausgeschaltet ist, zu speichern und darüber hinaus die Zählfunktion zu erhalten, sind zählerbasierte Multiturn-Einheiten häufig mit einer Batterie ausgestattet, die bei Ausfall der Hauptstromversorgung die Energieversorgung zumindest der Multiturn-Einheit des Drehgebers übernimmt.

Die EP1462771 B1 beschreibt beispielsweise einen Multiturn-Drehgeber mit einer zählerbasierten Multiturn-Einheit.

Während die Funktion der Multiturn-Einheit im Normalbetrieb, d.h. wenn neben der Multiturn-Einheit auch eine Singleturn-Einheit zur Messung der Winkelposition innerhalb einer Umdrehung der Welle aktiv ist, mit der Singleturn-Einheit überprüft werden kann (die Anzahl der mit der Multiturn-Einheit erfassten Umdrehungen muss sich zwingend ändern, wenn die Singleturn-Einheit eine vollständige Umdrehung feststellt), bleibt ein Ausfall der Multiturn-Einheit bei abgeschalteter Hauptstromversorgung unentdeckt.

Es ist daher Aufgabe der Erfindung, einen Multiturn-Drehgeber mit anzugeben, der eine erhöhte funktionale Sicherheit aufweist.

Diese Aufgabe wird gelöst durch einen Multiturn-Drehgeber nach Anspruch 1. Vorteilhafte Details ergeben sich aus den von Anspruch 1 abhängigen Ansprüchen.

Es wird nun ein Multiturn-Drehgeber vorgeschlagen, mit einer Singleturn-Einheit, einer ersten Multiturn-Einheit und einer zweiten Multiturn-Einheit. Die Singleturn-Einheit umfasst einen Codeträger, der zur Erzeugung von Singleturn-Positionssignalen von einer Singleturn-Abtasteinrichtung abtastbar ist und einer Singleturn-Auswerteeinheit zur Verarbeitung der Singleturn-Positionssignale zu einem Singleturn-Codewort, das die absolute Position einer Eingangswelle innerhalb einer Umdrehung angibt. Die erste Multiturn-Einheit umfasst wenigstens einen ersten Multiturn-Codeträger, der zur Erzeugung von ersten Multiturn-Positionssignalen von einer ersten Multiturn-Abtasteinrichtung abtastbar ist und einer ersten Multiturn-Auswerteeinheit zur Verarbeitung der ersten Multiturn-Positionssignale zu einem ersten Multturn-Codewort, das die Anzahl der zurückgelegten Umdrehungen der Eingangswelle angibt. Die zweite Multiturn-Einheit, umfasst wenigstens einen zweiten Multiturn-Codeträger, der zur Erzeugung von zweiten Multiturn-Positionssignalen von einer zweiten Multiturn-Abtasteinrichtung abtastbar ist und einer zweiten Multiturn-Auswerteeinheit zur Verarbeitung der zweiten Multiturn-Positionssignale zu einem zweiten Multiturn-Codewort, das ebenfalls die Anzahl der zurückgelegten Umdrehungen der Eingangswelle angibt.

Durch die zwei unabhängig voneinander erzeugten Multiturn-Codeworte ist 5 die Funktion der Multiturn-Einheiten feststellbar.

Weitere Vorteile sowie Einzelheiten der vorliegenden Erfindung ergeben sich aus der nachfolgenden Beschreibung anhand der Figuren. Dabei zeigt
- Figur 1: ein erstes Ausführungsbeispiel eines erfindungsgemäßen Multiturn-Drehgebers,
- Figur 2: ein Prinzipschaltbild der ersten Multiturn-Auswerteeinheit aus Figur1,
- Figur 3: ein erstes Beispiel für die Auswertung der Multiturn-Codewörter,
- Figur 4: ein zweites Beispiel für die Auswertung der Multiturn-Codewörter und
- Figur 5: ein weiteres Ausführungsbeispiel eines erfindungsgemäßen Multiturn-Drehgebers.

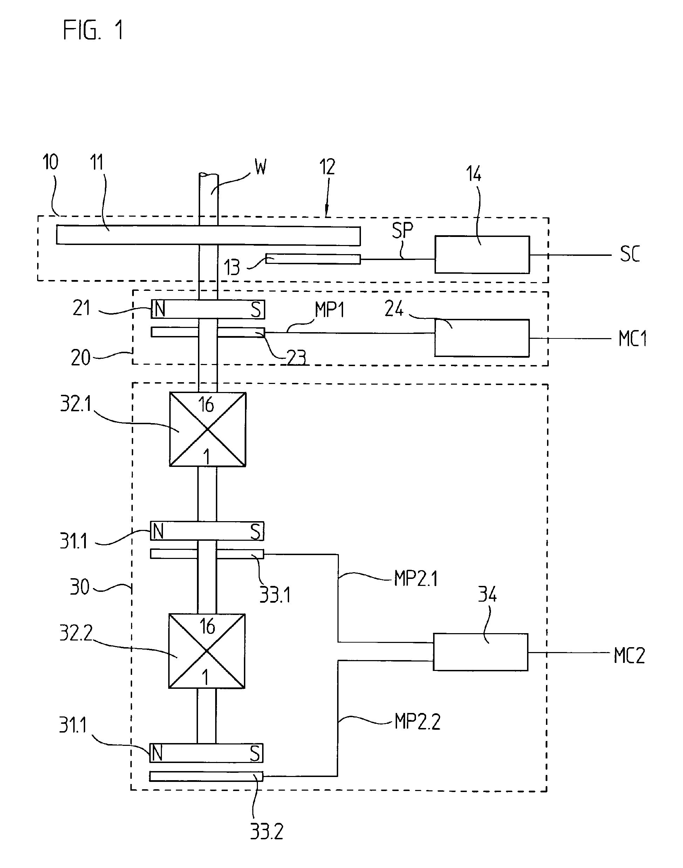

In Figur 1 ist das Prinzip eines ersten erfindungsgemäßen Multiturn-Drehgebers dargestellt. Er besteht aus einer Singleturn-Einheit 10, einer ersten Multiturn-Einheit 20, sowie einer zweiten Multiturn-Einheit 30.

Die Singleturn-Einheit 10 wird von einer Codescheibe 11 gebildet, die direkt mit einer zu messenden Eingangswelle W gekoppelt ist. Die Codescheibe 11 trägt eine lichtelektrisch, magnetisch, kapazitiv oder induktiv abtastbare Codierung 12, um eine Umdrehung der Eingangswelle W in eine Vielzahl von unterscheidbaren Sektoren aufzuteilen. Diese Codierung 12 ist in der Regel ein mehrspuriger Code, z.B. ein Gray-Code, sie kann aber auch durch einen einspurigen Kettencode, einem sog. "Pseudo Random Code" (PRC) gebildet werden. Die Codierung 12 wird zur Bildung von Singleturn-Positionssignalen SP von einer Abtasteinrichtung 13 abgetastet. Die Singleturn-Positionssignale SP sind einer Singleturn-Auswerteeinheit 14 zugeführt, die ein mehrstelliges Singleturn-Codewort SC bildet und an ihrem Ausgang ausgibt, das die Absolutposition der Eingangswelle W innerhalb einer einzigen Umdrehung angibt.

Zur Erfassung der Umdrehungszahlen der Eingangswelle W sind die Multiturn-Einheiten 20, 30 vorgesehen.

Die erste Multiturn-Einheit 20 ist eine zählerbasierte Multiturn-Einheit. Sie besteht aus einem ersten Multiturn-Codeträger 21, der ebenfalls drehfest mit der Eingangswelle W verbunden ist. Der erste Multiturn-Codeträger 21 weist einen einzigen magnetischen Dipol auf, also einen Nord- und einen Südpol. Die Pole werden von einer ersten Multiturn-Abtasteinrichtung 23 abgetastet. Diese weist mehrere magnetfeldempfindliche Sensorelemente auf, mit denen erste Multiturn-Positionssignale MP1 generierbar sind, aus denen in einer ersten Multiturn-Auswerteeinheit 24 ein erstes Multiturn-Codewort MC1 20 gebildet werden kann, das die absolute Position des ersten Multiturn-Codeträgers 21 angibt. Bei den Sensorelementen handelt es sich beispielsweise um Hall-Sensoren, MR-Sensoren oder GMR-Sensoren. Mit Vorteil sind die Sensorelemente und die erste Multiturn-Auswerteeinheit 24 zusammen auf einem Halbleitersubstrat integriert.

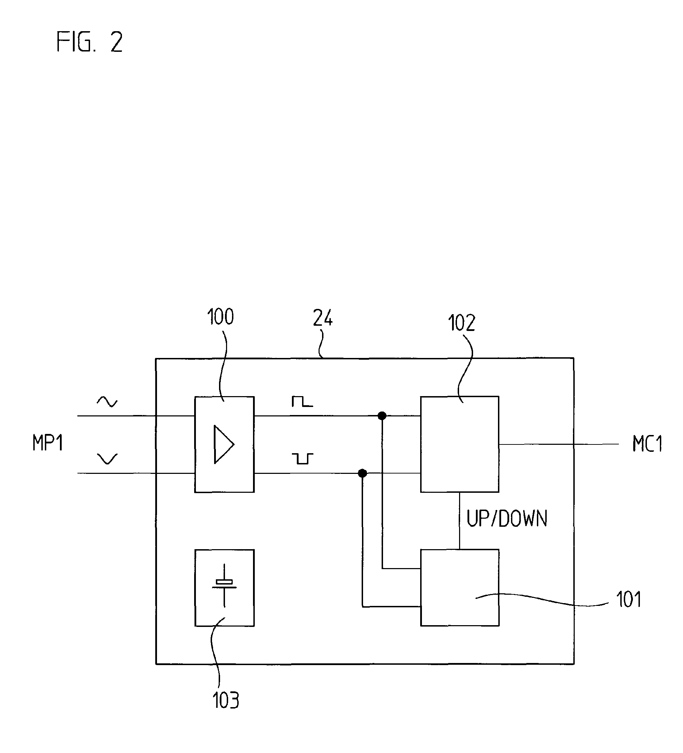

Figur 2 zeigt ein Prinzipschaltbild der ersten Multiturn-Auswerteeinheit 24. Dabei wird angenommen, dass die ersten Multiturn-Positionssignale MP1 zwei Signale umfassen, die einen weitgehend sinusförmigen Verlauf aufweisen und während einer Umdrehung der Eingangswelle W eine vollständige Periode der Sinusschwingung durchlaufen. Üblicherweise weisen diese beiden Signale eine Phasenverschiebung von ca. 90° zueinander auf, wodurch es möglich wird, die Drehrichtung der Eingangswelle W zu bestimmen. In der Multiturn-Auswerteeinheit 24 sind die ersten Multiturn-Positionssignale MP1 zuerst einer Signalformungseinheit 100 zugeführt, die aus den sinusförmigen Eingangssignalen digitale, rechteckförmige Zählsignale formt, die sie zum einen einem Richtungsdiskriminator 101 und zum anderen einer Zählereinheit 102 zuführt. Der Richtungsdiskriminator 101 stellt aus der zeitlichen Abfolge der Flanken der Zählsignale die Drehrichtung fest und übermittelt diese als Richtungssignal UP/DOWN der Zählereinheit 102. Die Zählereinheit 102 verwendet wiederum wenigstens eine steigende oder fallende Flanke der Zählsignale, sowie das Richtungssignal UP/DOWN, zum richtungsabhängigen Zählen der Umdrehungen der Eingangswelle W.

Weiter ist in der ersten Multiturn-Auswerteeinheit 24 eine Batterie 103 angedeutet. Diese versorgt bei ausgeschalteter Hauptstromversorgung (beispielsweise wenn die Maschine, in der der Multiturn-Drehgeber betrieben wird, ausgeschaltet ist) alle für den Zählvorgang notwendigen Bauteile, ggf. auch die erste Multiturn-Abtasteinrichtung 23. Damit ist gewährleistet, dass auch im ausgeschalteten Zustand etwaige Umdrehungen der Eingangswelle W gezählt werden und somit nach dem Einschalten ein erstes Multiturn-Codewort MC1 mit der korrekten Anzahl zurückgelegter Umdrehungen der Eingangswelle W zur Verfügung steht.

Es sei an dieser Stelle ausdrücklich darauf hingewiesen, dass es verschiedenste Varianten zählerbasierter Multiturn-Einheiten gibt, insbesondere Varianten, die im Ausschaltzustand zum Zwecke der Stromersparnis gepulst betrieben werden, sowie Varianten, die keine Batterie benötigen, da sie die für den Zählvorgang benötigte Energie, beispielsweise mit einem Impulsdraht-Sensor (auch unter der Bezeichnung Wiegand-Draht bekannt) aus Magnetfeldschwankungen während einer Umdrehung der Eingangswelle W gewinnen und den Zählerstand zwischen den Zählvorgängen in einem nichtflüchtigen Speicher abspeichern.

Bei der zweiten Multiturn-Einheit 30 handelt es sich um eine getriebebasierte Multiturn-Einheit, die beispielhaft mit zwei Getriebestufen 32.1, 32.2 dargestellt ist. Die Anzahl der benötigten Getriebestufen hängt weitgehend von der Anzahl der festzustellenden Umdrehungen der Eingangswelle W, sowie der Anzahl der mit einer Getriebestufe feststellbaren Umdrehungen, ab. Sollen nur wenige Umdrehungen der Eingangswelle W gemessen werden, so reicht ggf. eine Getriebestufe aus. Zur Feststellung der Umdrehungen einer Vorschubspindel einer Werkzeugmaschine können dagegen drei und mehr Getriebestufen erforderlich sein.

Die erste Getriebestufe 32.1 ist direkt mit der Eingangswelle W gekoppelt. Sie weist eine 16-fache Untersetzung auf und ihre Ausgangswelle ist wiederum mit der zweiten Getriebestufe 32.2 gekoppelt, die ebenfalls eine Untersetzung um den Faktor 16 durchführt. Die Getriebestufen 32.1, 32.2 treiben jeweils zweite Multiturn-Codeträger 31.1, 31.2 an, die von zweiten Multiturn-Abtasteinrichtungen 33.1, 33.2 zur Erzeugung von zweiten Multiturn-Positionssignalen MP2.1, MP2.2 abgetastet werden. Die Information, in welcher der zählbaren Umdrehungen sich die Eingangswelle W gerade befindet, ist in der Winkelstellung der zweiten Multiturn-Codeträger 31.1, 31.2 codiert. Die zweiten Multiturn-Codeträger 31.1, 31.2 werden, wie bereits der erste Multiturn-Codeträger 21, aus nur einem magnetischen Dipol gebildet. Die Abtastung der zweiten Multiturn-Codeträger 31.1, 31.2 erfolgt somit analog zur Abtastung des ersten Multiturn-Codeträgers 21. Abweichend zu den Multiturn-Positionssignalen MP1 der ersten Multiturn-Einheit 20 werden die zweiten Multiturn-Positionssignale MP1, MP2 jedoch in einer zweiten Multiturn-Auswerteeinheit 34 interpoliert, d.h. Momentanwerten der Multiturn-Positionssignale MP1, MP2 werden Absolutwerte zugeordnet, die die Winkelposition der jeweiligen Multiturn-Codeträger 31.1, 31.2 angeben. Die Auflösung der Momentanwerte entspricht mindestens dem Untersetzungsverhältnis der zugehörigen Getriebestufe. Schließlich verarbeitet die zweite Multiturn-Auswerteeinheit 34 die ermittelten Absolutwerte der zweiten Multiturn-Positionssignale MP2.1, MP2.2 zu einem zweiten Multiturn-Codewort MC2.

Neben der hier beschriebenen Variante mit einem mehrstufigen Untersetzungsgetriebe sind für die vorliegende Erfindung selbstverständlich auch getriebebasierte Multiturn-Einheiten geeignet, die, wie die Eingangs erwähnte EP1457762A1 vorschlägt, auf einem Differenzzahngetriebe beruhen.

Durch die zwei vorgesehenen Multiturn-Einheiten 20, 30 stehen im Multiturn-Drehgeber zwei Multiturn-Codewörter MC1, MC2 zur Verfügung, die unabhängig voneinander gebildet werden. Durch Vergleich dieser zwei Multiturn-Codewörter MC1, MC2 ist es nun möglich festzustellen, ob die beiden Multiturn-Einheiten 20, 30 funktionieren. Das gilt insbesondere auch dann, wenn der Multiturn-Drehgeber, bzw. die Maschine, in der der Multiturn-Drehgeber betrieben wird, nach einer Ausschaltphase wieder eingeschaltet wird.

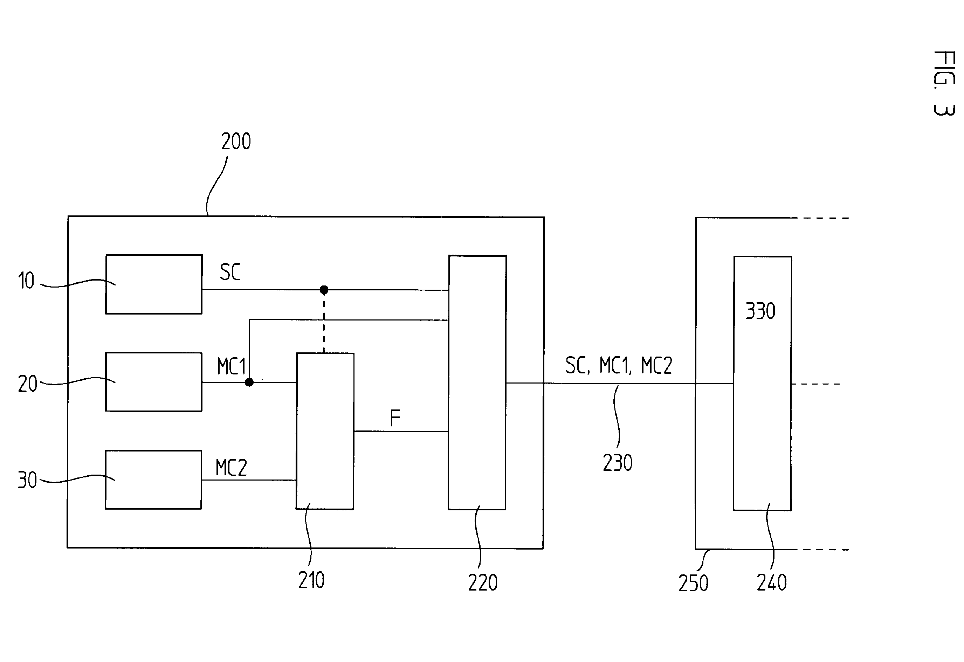

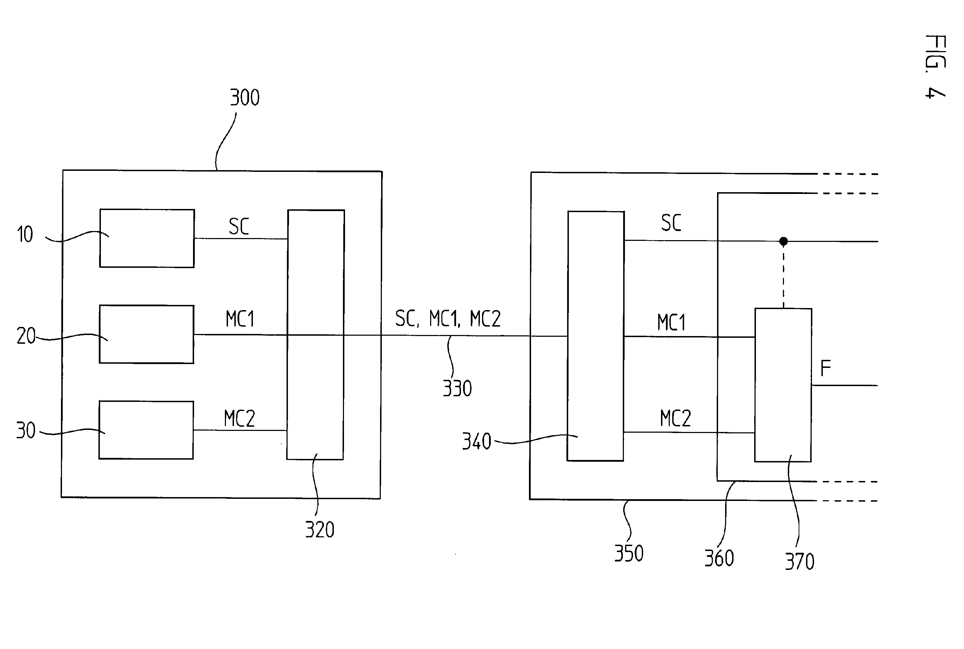

Die Figuren 3 und 4 zeigen bevorzugte Ausführungsbeispiele für die weitere Verarbeitung, bzw. Auswertung der Multiturn-Codewörter MC1, MC2.

Figur 3 zeigt einen Multiturn-Drehgeber 200, der neben der Singleturn-Einheit 10, der ersten Multiturn-Einheit 20 und der zweiten Multiturn-Einheit 30 weiter eine Vergleichereinheit 210 umfasst, dem die Multiturn-Codewörter MC1, MC2 zugeführt sind. Die Vergleichereinheit 210 stellt durch Vergleich der Werte der Multiturn-Codewörter MC1, MC2 Abweichungen fest und gibt in Abhängigkeit vom Ergebnis des Vergleichs ein Zustandsflag F aus. Das Singleturn-Codewort SC, wenigstens eines der Multiturn-Codewörter MC1, MC2 (im dargestellten Beispiel das erste Multiturn-Codewort MC1), sowie das Zustandsflag F sind einer Schnittstelleneinheit 220 zugeführt, mittels derer die Werte über einen Datenübertragungskanal 230 zu einer weiteren Schnittstelleneinheit 240 in einer Folgeelektronik 250 übertragbar sind. Diese kann das Zustandsflag F auswerten und im Fehlerfall geeignete Maßnahmen, beispielsweise das geordnete Anhalten der Maschine, veranlassen.

Der Datenübertragungskanal 230 ist mit Vorteil als bidirektionale serielle Schnittstellenverbindung ausgeführt, über die Befehle, insbesondere Positionsdatenanforderungsbefehle, von der Folgeelektronik 250 zum Multiturn-Drehgeber 200 und in der Gegenrichtung Antwortdaten, insbesondere das Singleturn-Codewort SC, die Multiturn-Codeworte MC1, MC2, sowie das Zustandsflag F übertragbar sind. Die Übertragung erfolgt mittels serieller Datenströme. Besonders vorteilhaft ist hier, dass die Übertragung des Zustandsflags F, das ja im einfachsten Fall lediglich aus einem Bit besteht, die Datenübertragungsdauer im Vergleich zu einem aus dem Stand der Technik bekannten Multiturn-Drehgeber lediglich um die Übertragungszeit für ein Bit verlängert.

Figur 4 zeigt dagegen einen Multiturn-Drehgeber 300, der neben der Singleturn-Einheit 10, der ersten Multiturn-Einheit 20 und der zweiten Multiturn-Einheit 30 weiter lediglich eine Schnittstelleneinheit 320 umfasst, der das Singleturn-Codewort SC und die Multiturn-Codewörter MC1, MC2 zugeführt 10 sind. Sämtliche Codewörter SC, MC1, MC2 sind nun über einen Datenübertragungskanal 330 zu einer weiteren Schnittstelleneinheit 340 in einer Folgeelektronik 350 übertragbar. In einer Steuerungseinheit 360 in der Folgeelektronik 350 ist nun eine Vergleichereinheit 370 angeordnet, der die über den Datenübertragungskanal 330 bei der Schnittstelleneinheit 340 eintreffenden Multiturn-Codewörter MC1 , MC2 zugeführt sind. Die Vergleichereinheit 370 kann nun, analog zur Vergleichereinheit 210 aus Figur 3, einen Vergleich der Multiturn-Codewörter MC1, MC2 durchführen und das Zustandsflag F generieren, das in der Steuerungseinheit 360 entsprechend berücksichtigt wird.

Da in diesem bevorzugten Ausführungsbeispiel zwei Multiturn-Codewörter MC1, MC2, die im Multiturn-Drehgeber 300 vollkommen unabhängig voneinander generiert wurden, zur Folgeelektronik 350 übertragen werden, können nicht nur Fehler in den Multiturn-Einheiten 20, 30, sondern auch Fehler bei der Datenübertragung vom Multiturn-Drehgeber 300 über den Datenübertragungskanal 330 zur Folgeelektronik 350 festgestellt werden. Der Datenübertragungskanal 330 ist auch in diesem Beispiel vorteilhaft als bidirektionale serielle Schnittstellenverbindung ausgebildet.

Im laufenden Betrieb ist die korrekte Funktion einer Multiturn-Einheit 20, 30 auch mit Hilfe des Singleturn-Codeworts SC feststellbar, da ein direkter Zusammenhang zwischen der Feststellung einer vollen Umdrehung der Eingangswelle W und der Veränderung der Multiturn-Codeworte MC1, MC2 besteht. In anderen Worten ausgedrückt müssen sich die Multiturn-Codeworte MC1, MC2 zwingend um eine festgelegte Schrittweite ändern, wenn mittels des Singleturn-Codewortes SC die Vollendung einer Umdrehung der Welle W erkannt wird. Daher kann, beispielsweise bezogen auf das Beispiel in Figur 4, nach einem einmal durchgeführten Vergleich der Multiturn-Codeworte MC1, MC2, das Zustandsflag F auch anhand eines Vergleichs zwischen dem Singleturn-Codewort SC und wenigstens einem der Multiturn-Codewörter MC1, MC2 gewonnen werden. Das bedeutet, es kann ausreichend sein, lediglich zu geeigneten Zeitpunkten, z.B. nach dem Einschalten der Maschine, bzw. des Multiturn-Drehgebers, die Multiturn-Codeworte MC1, MC2 auf Gleichheit zu überprüfen und nach dieser Überprüfung nur noch eines der Multiturn-Codeworte MC1, MC2 über den Datenübertragungskanal 330 zur Folgeelektronik zu übertragen und die Funktion der im laufenden Betrieb verwendeten Multiturn-Einheit 20, 30 anhand des Singleturn-Codeworts SC zu überprüfen. Auf diese Weise kann die zu über15 tragende Datenmenge reduziert werden.

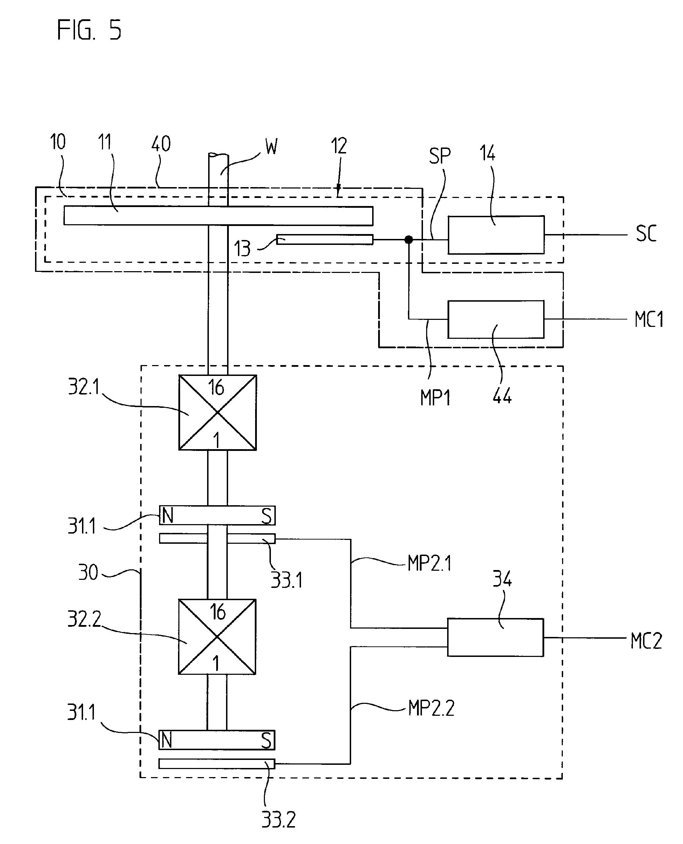

In Figur 5 ist das Prinzip eines zweiten erfindungsgemäßen Multiturn-Drehgebers dargestellt. Er besteht ebenfalls aus einer Singleturn-Einheit 10, einer ersten Multiturn-Einheit 40 und einer zweiten Multiturn-Einheit 30. Die Singleturn-Einheit 10 und die zweite Multiturn-Einheit 30 entsprechen den im Zusammenhang mit Figur 1 beschriebenen Einheiten und werden daher nicht noch einmal diskutiert.

Die erste Multiturn-Einheit 40 nutzt dagegen die Tatsache, dass auch die Singleturn-Positionssignale SP, die aus der Abtastung des Codes 12 auf dem Codeträger 11 mit der Singleturn-Abtasteinrichtung 13 resultieren, zur Bildung eines ersten Multiturn-Codeworts MC1 herangezogen werden können. Daher sind die Singleturn-Positionssignale SP, zumindest teilweise, als erste Multiturn-Positionssignale MP1 einer ersten Multiturn-Verarbeitungseinheit 44 zugeführt, die Zählsignale zur Bildung des ersten Multiturn-Codeworts MC1 generiert und zählt. Bei der ersten Multiturn-Einheit 40 handelt es sich somit um eine zählerbasierte Multiturn-Einheit.

Der Codeträger 11 mit dem Code 12, sowie die Singleturn-Abtasteinrichtung 13 sind in diesem Ausführungsbeispiel der ersten Multiturn-Einheit 40 zuzuordnen.

Diese Variante ist besonders dann vorteilhaft einsetzbar, wenn der Code 12 ohnehin so ausgeführt ist, dass Abtastsignale entstehen, die eine Periodendauer aufweisen, die der Umdrehung der Eingangswelle W entspricht.

## Patentansprüche

1. Multiturn-Drehgeber mit
- einer Singleturn-Einheit (10), umfassend einen Codeträger (11), der zur Erzeugung von Singleturn-Positionssignalen (SP) von einer Singleturn-Abtasteinrichtung (13) abtastbar ist und einer Singleturn-Auswerteeinheit (14) zur Verarbeitung der Singleturn-Positionssignale (SP) zu einem Singleturn-Codewort (SC), das die absolute Position einer Eingangswelle (W) innerhalb einer Umdrehung angibt,
- einer ersten Multiturn-Einheit (20, 40), umfassend wenigstens einen ersten Multiturn-Codeträger (11, 21), der zur Erzeugung von ersten Multiturn-Positionssignalen (MP1) von einer ersten Multiturn-Abtasteinrichtung (13, 23) abtastbar ist und einer ersten Multiturn-Auswerteeinheit (24) zur Verarbeitung der ersten Multiturn-Positionssignale (MP1) zu einem ersten Multiturn-Codewort (MC1), das die Anzahl der zurückgelegten Umdrehungen der Eingangswelle (W) angibt, wobei
- eine zweite Multiturn-Einheit (30) vorgesehen ist, umfassend wenigstens einen zweiten Multiturn-Codeträger (31.1, 31.2), der zur Erzeugung von zweiten Multiturn-Positionssignalen (MP2.1, MP2.2) von einer zweiten Multiturn-Abtasteinrichtung (33.1, 33.1) abtastbar ist und einer zweiten Multiturn-Auswerteeinheit (24) zur Verarbeitung der zweiten Multiturn-Positionssignale (MP2.1, MP2.2) zu einem zweiten Multiturn-Codewort (MC2), das ebenfalls die Anzahl der zurückgelegten Umdrehungen der Eingangswelle (W) angibt.

2. Multiturn-Drehgeber nach Anspruch 1, wobei weiter eine Vergleichereinheit (210) vorgesehen ist, der die Multiturn-Codeworte (MC1, MC2) zugeführt sind und in der Vergleichereinheit (210) ein Zustandsflag (F) generierbar ist, das die Funktion der Multiturn-Einheiten (20, 30; 20, 40) 5 angibt.

3. Multiturn-Drehgeber nach Anspruch 2, wobei weiter eine Schnittstelleneinheit (220) vorgesehen ist, mit der das Singleturn-Codewort (SC), wenigstens ein Multiturn-Codewort (MC1, MC2), sowie das Zustandsflag (F) zu einer Folgeelektronik (250) übertragbar sind.

4. Multiturn-Drehgeber nach Anspruch 1, wobei eine Schnittstelleneinheit (320) vorgesehen ist, mit der das Singleturn-Codewort (SC), das erste Multiturn-Codewort (MC1), sowie das zweite Multiturn-Codewort (MC2), zur weiteren Auswertung zu einer Folgeelektronik (350) übertragbar sind.

5. Multiturn-Drehgeber nach einem der vorhergehenden Ansprüche, wobei die erste Multiturn-Einheit (20, 40) eine zählerbasierte Multiturn-Einheit ist.

6. Multiturn-Drehgeber nach einem der vorhergehenden Ansprüche, wobei die zweite Multiturn-Einheit (30) eine getriebebasierte Multiturn-Einheit ist.

## Claims

1. Multi-turn rotary encoder having
- a single-turn unit (10) comprising a code carrier (11), which can be scanned by a single-turn scanning device (13) in order to generate single-turn position signals (SP), and a single-turn evaluation unit (14) for processing the single-turn position signals (SP) to form a single-turn code word (SC) which indicates the absolute position of an input shaft (W) within one revolution,
- a first multi-turn unit (20, 40) comprising at least one first multi-turn code carrier (11, 21), which can be scanned by a first multi-turn scanning device (13, 23) in order to generate first multi-turn position signals (MP1), and a first multi-turn evaluation unit (24) for processing the first multi-turn position signals (MP1) to form a first multi-turn code word (MC1) which indicates the number of revolutions covered by the input shaft (W),
- a second multi-turn unit (30) being provided, said unit comprising at least one second multi-turn code carrier (31.1, 31.2), which can be scanned by a second multi-turn scanning device (33.1, 33.2) in order to generate second multi-turn position signals (MP2.1, MP2.2), and a second multi-turn evaluation unit (24) for processing the second multi-turn position signals (MP2.1, MP2.2) to form a second multi-turn code word (MC2) which likewise indicates the number of revolutions covered by the input shaft (W).

2. Multi-turn rotary encoder according to Claim 1, a comparator unit (210) also being provided, to which the multi-turn code words (MC1, MC2) are supplied, and a status flag (F) being able to be generated in the comparator unit (210), which status flag indicates the function of the multi-turn units (20, 30; 20, 40).

3. Multi-turn rotary encoder according to Claim 2, an interface unit (220) also being provided, which interface unit can be used to transmit the single-turn code word (SC), at least one multi-turn code word (MC1, MC2) and the status flag (F) to subsequent electronics (250).

4. Multi-turn rotary encoder according to Claim 1, an interface unit (320) being provided, which interface unit can be used to transmit the single-turn code word (SC), the first multi-turn code word (MC1) and the second multi-turn code word (MC2) to subsequent electronics (350) for further evaluation.

5. Multi-turn rotary encoder according to one of the preceding claims, the first multi-turn unit (20, 40) being a counter-based multi-turn unit.

6. Multi-turn rotary encoder according to one of the preceding claims, the second multi-turn unit (30) being a transmission-based multi-turn unit.

## Revendications

1. Sonde de rotation multitour présentant une unité monotour (10) qui comprend un porte-code (11) qui peut être palpé pour former des signaux (SP) de position monotour par un dispositif (13) de palpage monotour et une unité (14) d'évaluation monotour qui traite les signaux (SP) de position monotour pour former un mot de code monotour (SC) qui indique la position absolue d'un arbre d'entrée (W) à l'intérieur d'un tour,
une première unité multitour (20, 40) qui comprend au moins un premier porte-code multitour (11, 21) qui peut être palpé par un premier dispositif (13, 23) de palpage multitour pour former des premiers signaux de position multitour (MP1) et une première unité d'évaluation multitour (24) qui traite les premiers signaux (MP1) de position multitour pour former un premier mot de code multitour (MC1] qui indique le nombre des tours effectués par l'arbre d'entrée (W),
une deuxième unité multitour (30) étant prévue et comprenant au moins un deuxième porte-code multitour (31.1, 31.2) qui peut être palpé par un deuxième dispositif de palpage multitour (33.1, 33.2) pour former des deuxièmes signaux de position multitour (MP2.1, MP2.2) et une deuxième unité d'évaluation multitour (24) qui traite les deuxièmes signaux de position multitour (MP2.1, MP2.2) pour former un deuxième mot de code multitour (MC2) qui indique également le nombre des tours parcourus par l'arbre d'entrée (W),

2. Sonde de rotation multitour selon la revendication 1, dans lequel est également prévue une unité de comparaison (210) à laquelle les mots de code multitour (MC1, MC2) sont amenés, un indicateur d'état (F) qui indique le fonctionnement des unités multitour (20, 30; 20, 40) pouvant être produit dans l'unité de comparaison (210).

3. Sonde de rotation multitour selon la revendication 2, dans lequel une unité d'interface (220) est en outre prévue et permet de transférer le mot de code monotour (SC), au moins un mot de code multitour (MC1, MC2) ainsi que l'indicateur d'état (F) à une électronique de suivi (250).

4. Sonde de rotation multitour selon la revendication 1, dans lequel est prévue une unité d'interface (320) qui permet de transférer le mot de code monotour (SC), le premier mot de code multitour (MC1) ainsi que le deuxième mot de code multitour (MC2) à une électronique de suivi (350) pour la poursuite de leur évaluation.

5. Sonde de rotation multitour selon l'une des revendications précédentes, dans lequel la première unité multitour (20, 40) est une unité multitour basée sur compteur.

6. Sonde de rotation multitour selon l'une des revendications précédentes, dans lequel la deuxième unité multitour (30) est une unité multitour basée sur une transmission.
